Europäisches Patentamt

European Patent Office

Office européen des brevets

(19)

(11) Veröffentlichungsnummer: **0 043 975**
**B1**

(12) # EUROPÄISCHE PATENTSCHRIFT

(45) Veröffentlichungstag der Patentschrift:
**12.09.84**

(51) Int. Cl.³: **G 03 B 17/26**

(21) Anmeldenummer: **81105043.4**

(22) Anmeldetag: **30.06.81**

(54) **Filmkassette für mehrere Filmstreifen.**

(30) Priorität: **10.07.80 DE 3026070**

(43) Veröffentlichungstag der Anmeldung:
**20.01.82 Patentblatt 82/3**

(45) Bekanntmachung des Hinweises auf die Patenterteilung:
**12.09.84 Patentblatt 84/37**

(84) Benannte Vertragsstaaten:
**BE CH DE FR GB IT LI**

(56) Entgegenhaltungen:
**EP - A - 0 014 309**

(73) Patentinhaber: **AGFA-GEVAERT Aktiengesellschaft,
D-5090 Leverkusen 1 (DE)**

(72) Erfinder: **Hoffacker, Franz, Dipl.-Ing., Schumannweg 11,
D-4018 Langenfeld (DE)**
Erfinder: **Kovacic, Guido, Schulstrasse 7, D-5463 Unkel
(DE)**
Erfinder: **Lührig, Hermann, Dipl.-Ing.,
Heinrich-von-Kleist-Strasse 12,
D-5090 Leverkusen 1 (DE)**

**Beschreibung**

Die Erfindung betrifft eine Filmkassette für mindestens zwei für die Aufnahme mehrerer Bilder geeignete, lichtempfindliche Filmstreifen, bestehend aus einer lichtundurchlässigen flachen biegsamen Tasche von etwa der Länge eines Filmstreifens mit Zwischenwänden zur Trennung der Filmstreifen und mindestens einer senkrecht zur Taschenlänge verlaufenden mit Lichtabdichtungsmitteln versehenen, als Filmmaul ausgebildeten, Kassettenöffnung zum Durchtreten der Filmstreifen.

Bei den bereits vorgeschlagenen Kassetten und Kameras dieser Art besteht ein Problem darin, dass eine Kassette für einen Filmstreifen für eine grössere Anzahl von Bildern sehr lang und somit eine zugehörige Kamera unter Umständen unhandlich wird.

Es wurde bereits vorgeschlagen eine Kamera zu verwenden, in die eine Kassette mit zwei seitlich versetzt zueinander angeordneten Filmstreifen eingelegt wird und die Kamera zwei Transporteinrichtungen besitzt, wobei die erste den einen Streifen auszieht, die einzelnen Bilder belichtet und den Filmstreifen wieder in die Kassette zurückschiebt und dann auf den zweiten Transportmechanismus für den zweiten Filmstreifen umgeschaltet wird, um den zweiten Filmstreifen auszuziehen und wieder einzuschieben und hierbei zu belichten.

Dieses Verfahren ist vorteilhaft, da mit einer Kassette, durch die Kamera gesteuert, die doppelte Anzahl von Bildern mit der Kamera aufgenommen werden kann. Hierzu wird allerdings eine aufwendige Kamera mit zwei Transportmechanismen und eine breitere Kassette benötigt. Auch ist es nicht ohne weiteres möglich, in dieser Kamera wahlweise sowohl Kassetten mit nur einem als auch mit mehreren Filmstreifen zu verwenden.

Der Erfindung liegt daher die Aufgage zugrunde, eine Filmkassette zu schaffen, die bei vorgegebenem Filmstreifenformat in ihren Abmassen möglichst klein ist, mehrere Filmstreifen aufnehmen kann und in einer Kamera verwendbar ist, die eine Filmkassette mit wahlweise einem oder mehreren Filmstreifen aufnehmen kann.

Diese Aufgabe wird bei einer Filmkassette der eingangs genannten Art erfindungsgemäss dadurch gelöst, dass die Filmstreifen mit ihren Längskanten in der Filmkassette übereinanderliegen und in der Filmkassette so angeordnet sind, dass nach der Belichtung eines ersten Filmstreifens die Kassette aus der Kamera herausgenommen und nach Drehung parallel zu einer ihrer Achsen (L, Q, V) zur Belichtung eines nächsten Filmstreifens wieder einsetzbar ist.

Durch die Anordnung mehrerer Filmstreifen in einer Kassette so, dass die Längskanten der Streifen übereinanderliegen, ist es möglich, eine Kassette zu schaffen, die für einen oder mehrere Filmstreifen geeignet ist und sehr schmal in ihrer Breite gehalten werden kann.

Die Kassette nimmt einen, zwei, drei oder vier Filmstreifen übereinander liegend auf, die durch einfaches Herausnehmen der Kassette aus der Kamera, Drehen der Kassette parallel zu einer ihrer Achsen und Wiedereinlegen der Kassette nacheinander mit dem Transportmechanismus in Eingriff gebracht werden und die einzelnen Filmstreifen nacheinander von der Kamera aus der Kassette gezogen, belichtet und wieder in die Kassette eingeschoben werden.

Eine vorteilhafte Ausführungsform einer Kassette für zwei Filmstreifen zeichnet sich dadurch aus, dass an einer Stirnseite zwei Filmmäuler übereinander angeordnet sind und zwei Filmstreifen mit je einem einseitigen Anschnitt und mindestens einem Transportloch vorgesehen sind, deren Emulsionsseiten nach verschiedenen Flachseiten der Filmkassette zeigen und dass zur Belichtung des zweiten Filmstreifens eine Drehung der Kassette nach der Belichtung des ersten Filmstreifens um die zur Längsrichtung der Kassette parallelen Achse vorgesehen ist.

Eine andere zweckmässige Ausführungsform beinhaltet eine Kassette, bei welcher an jeder Stirnseite ein Filmmaul angeordnet ist und zwei gleiche Filmstreifen mit je zwei Transportlöchern am Filmstreifenanfang vorgesehen sind und dass die Emulsionsseiten der Filmstreifen nach verschiedenen Flachseiten der Filmkassette zeigen und zur Belichtung des zweiten Filmstreifens eine Drehung der Kassette nach der Belichtung des ersten Filmstreifens um die zur Breite der Kassette parallele Achse vorgesehen ist.

Die beiden Ausführungsformen unterscheiden sich im wesentlichen durch die Anordnung der Filmmäuler, die eine Drehung der Kassette beim Wiedereinlegen parallel zu verschiedenen Achsen erfordert. Bei übereinanderliegenden Mäulern erhält der Anfang des Filmstreifens einen Anschnitt, so dass jeder Filmstreifen durch kameraseitige Filmtransportmittel einzeln erfasst werden kann und bei der Anordnung der Kassettenmäuler an verschiedenen Stirnseiten der Kassette ist kein Anschnitt am Filmanfang zum einzelnen Erfassen der Filmstreifen erforderlich. Es können Transportlöcher an beiden Rändern der Filmstreifen vorgesehen werden. Die Emulsionsseiten der Filmstreifen in der Kassette können in Abhängigkeit von der vorgesehenen Drehrichtung für die Kassette nach Belichtung des ersten Filmstreifens entweder nach einer oder verschiedenen Seiten der Kassette zeigen.

Es ist bei beiden Ausführungen möglich, zum Beispiel die Filmstreifen mit der der Emulsionseite gegenüberliegenden Seite, der Filmrückseite, aufeinander gleiten zu lassen, wodurch eine Trennwand zwischen den Filmstreifen entfallen könnte.

Gemäss einer besonders zweckmässigen Ausführungsform sind an jeder Stirnseite der Filmkassette zwei Filmmäuler übereinander angeordnet und vier gleiche Filmstreifen mit je einem einseitigen Anschnitt und mit mindestens je einem Transportloch im Anfangsbereich der Filmstreifen vorgesehen und die Filmstreifen sind so angeordnet, dass deren Emulsionsseiten an den Stirnseiten paarweise nach verschiedenen Flachseiten der Kassette zeigen und die Drehungen der Kassette zur Belichtung der weiteren Filmstreifen nach der Belichtung des ersten Filmstreifens um die zur Längsrichtung der Kassette parallelen Achse und um die zur Breiten- und zur Längsachse der Kassette senkrechten Achse erfolgen.

Diese Ausführungsform erlaubt mit einer Kassette die vierfache Anzahl von Aufnahmen zu fertigen. Zu den Aufnahmen kann eine Kamera verwendet werden, die für Kassetten mit einem oder zwei Filmstreifen vorgesehen ist. Es ist nach dieser Ausführung auch eine Kassette mit nur drei Filmstreifen denkbar. Mehrfachkassetten der beschriebenen Ausführungsformen sind aufgrund des geringeren Materialverbrauches zu deren Herstellung preiswerter zu fertigen, zumal in wohl den meisten Fällen auf Trennwände zwischen den Filmrückseiten verzichtet werden kann.

Eine weitere Fortbildung der Kassette zeichnet sich dadurch aus, dass zur Vermeidung von Doppelbelichtungen die Kassette und/oder die Filmstreifen die Filmstreifenfolge kennzeichnende Marken und/oder Zahlen zum richtigen Einlegen in eine Kamera tragen und die Kamera mit einer entsprechenden Marke am Einlegeschlitz versehen ist und nach der Herausnahme der Kassette aus der Kamera die Marken und/oder Zahlen von der Kassette oder den Filmstreifen abtrennbar sind.

Eine weiter erhöhte Sicherheit gegen eine Doppelbelichtung wird dadurch erreicht, dass die Kassette mit Filmstreifen gefüllt ist, die im Bereich des ersten Transportloches nur eine schmale Transportlasche besitzen, die von der Kamera bei oder nach dem Belichten und dem Wiedereinschieben des Filmstreifens in die Kassette umgelegt oder abgetrennt wird, wodurch ein nochmaliger Transport dieses Filmstreifens unmöglich ist. Die Erfindung wird nachstehend anhand der Zeichnungen näher erläutert. Es zeigt:

Figur 1 eine Draufsicht auf eine Kassette mit zwei Filmstreifen und zwei Filmmäulern an einer Stirnseite der Kassette

Figur 2 einen Längsschnitt durch die Kassette nach Figur 1

Figur 3 eine Draufsicht auf eine Kassette mit je einem Filmmaul an jeder Stirnseite der Kassette

Figur 4 einen Längsschnitt durch die Kassette nach Figur 3

Figur 5 eine Draufsicht auf eine Kassette mit 4 Filmstreifen

Figur 6 einen Längsschnitt durch die Kassette der Figur 5 mit Trennwänden zwischen den Filmstreifen

Figur 7 einen Längsschnitt durch die Kassette der Figur 5 mit nur einer Trennwand

Figur 8 eine Draufsicht auf eine Kassette mit Orientierungsmarken und -zahlen

Figur 9 eine Kassette mit speziellen Filmstreifen, deren Transportlasche abtrennbar oder umlegbar ist.

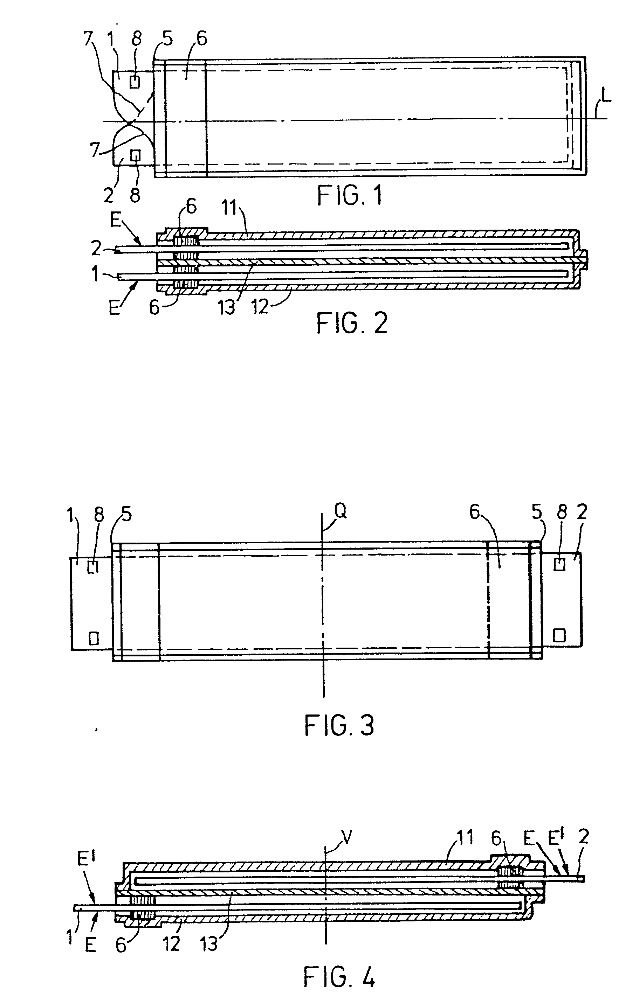

Gemäss den Figuren 1 und 2 besteht eine flache, taschenähnliche Filmkassette für zwei zur Aufnahme mehrerer Bilder geeigneter lichtempfindlicher Filmstreifen 1, 2 aus zwei flachen, schalenähnlichen Wänden 11 und 12. Sie sind aus einer im wesentlichen steifen, nur geringfügig biegbaren lichtdichten Folie, z.B. Metall- oder Kunststoffolie, die verformbar, z.B. tiefziehbar oder pressbar bzw. warmverformbar ist, hergestellt und miteinander an zwei Längsseiten und einer Stirnseite 5 lichtdicht verbunden. An der offenen Stirnseite 5 befinden sich die zum Durchtritt der Filmstreifen 1, 2 vorgesehene, durch Lichtdichtmittel abgedichteten Filmmäuler 6. Die beiden Wandschalen 11, 12 können zueinander symmetrisch oder auch unterschiedlich ausgestaltet sein. Gemäss dem Ausführungsbeispiel nach den Fig. 1 und 2 sind sie zueinander symmetrisch geformt. Sie weisen einen an den zu verbindenden Seiten vorgesehenen ebenen Rand auf. Innerhalb dieses Randes ist eine flache Wanne oder Mulde von etwa der Länge und Breite der Filmstreifen 1, 2 durch Tiefziehen oder Pressen ausgebildet, wobei die beiden Wannen bei miteinander verbundenen Wandschalen 11, 12 Raum für die Filmstreifen 1, 2 bilden.

An den Verbindungslinien der Wandschalen 11 12 ist eine Trennfolie als Trennwand 13 für die beiden Filmstreifen 1, 2 mit eingeschweisst oder eingeklebt. Im Bereich der Kassettenmäuler 6 ist diese Trennwand 13 beidseitig mit einem Lichtabdichtungsmittel versehen, so dass jeder Filmstreifen 1, 2 in der Kassette beidseitig gegen Lichteinfall geschützt ist.

Bei kratzunempfindlichen Filmstreifen ist es jedoch auch möglich, auf die Trennwand 13 zu verzichten und die beiden Filmstreifen 1, 2 so in die Kassette einzulegen, dass die den Emulsionsseiten E gegenüberliegenden Seiten der Filmstreifen 1, 2 aufeinander liegen und gleiten. Um einen Lichteinfall zwischen den Filmstreifen 1 2 zu vermeiden ist dann im Bereich des Kassettenmaules 6 quer zur Filmlängskante ein Abdichtungsstreifen gespannt. Es ist auch möglich die Filmstreifenrückseiten schwarz einzufärben und so die Lichtsicherheit der Filmstreifen gegen Lichteinfall zu verbessern.

Die Filmkassette wird zur Belichtung der Filmstreifen in eine Kamera gemäss DE-A-2 901 104 (Patentanmeldung P 29 01 104. 9) eingelegt und der Transportmechanismus der Kamera greift in das erste Perforationsloch 8 des ersten Filmstreifens 1 ein und fördert den Filmstreifen schrittweise für jede Aufnahme in Pfeilrichtung aus der Kassette und schiebt nach der letzten Aufnahme den Filmstreifen in Pfeilrichtung zurück in die lichtsichere Kassette. Natürlich kann die Kamera auch so ausgebildet sein, dass der Filmstreifen 1 zuerst ganz ausgezogen wird und die Belichtung bei dem schrittweisen Rücktransport erfolgt.

Nach der Belichtung des Filmstreifens 1 wird die Kassette entnommen, um 180° um ihre Längsachse L gedreht und zur Belichtung des zweiten Filmstreifens 2 wieder in die Kamera eingeschoben.

Die Figuren 3 und 4 zeigen in einer Draufsicht und einem Schnitt eine Ausführungsform einer Filmkassette, bei welcher an beiden Stirnseiten 5 je ein Filmmaul 6 zum Durchtreten der Filmstreifen 1, 2 angeordnet ist. Die Filmkassette wird ebenfalls aus 2 Wandschalen 11 und 12 geformt, in denen die Filmstreifen 1 und 2 beweglich verschiebbar sind. Bei dieser Anordnung der Filmstreifen- und mäuler in der Kassette sind ein oder auch zwei Perforationslochreihen 8 zum Transport der Filmstreifen in der Kamera möglich. Die Emulsionsseiten E der Filmstreifen 1, 2 können nach einer oder verschiedenen Seiten der Kassette gerichtet sein. Zum Beispiel sind in Figur 3 beide Filmstreifen mit der fotografisch wirksamen Beschichtung, der Emulsionsseite E' (Fig. 4), nach einer Flachseite der Kassette zeigend eingelegt. Soll ein Gleiten der empfindlichen Emulsionsschicht E' auf der Rückseite des anderen Filmstreifens vermieden werden, so ist es zweckmässig, zwischen die Wandschalen 11 und 12 eine Trennwand 13 einzukleben oder einzuschweissen. Zur Belichtung des zweiten Filmstreifens 2 muss bei dieser Anordnung der Streifen die Kassette nach der Belichtung und Entnahme aus der Kamera parallel zu der senkrechten Achse V gedreht werden, um den zweiten Streifen der Kassette zu belichten. Werden die Filmstreifen so in die Kassette eingelegt, dass die mit Emulsion E beschichteten Seiten nach verschiedenen Flachseiten der Kassette zeigen, so muss die Kassette zur Belichtung des Filmstreifens 2 parallel zur Querachse Q der Kassette gedreht werden, bevor sie zur Belichtung des zweiten Filmstreifens wieder in die Kamera eingeführt wird.

Da bei dieser Ausführung (Fig. 4) die Filmstreifen so eingelegt werden können, dass sie sich mit der emulsionsfreien Rückseite berühren, kann auch bei dieser Ausführung unter Umständen auf eine Trennwand 13 verzichtet werden (nicht dargestellt).

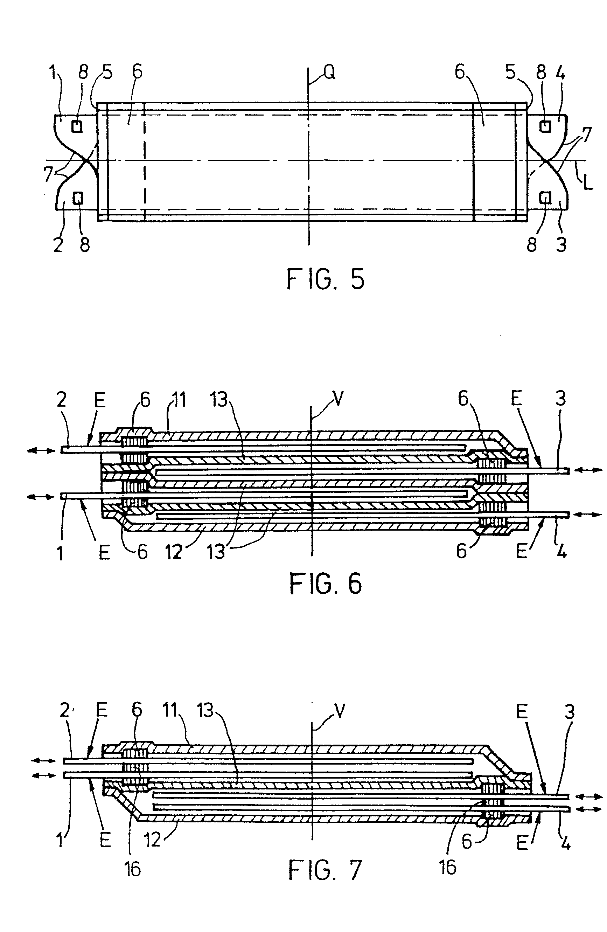

Eine besonders zweckmässige Ausführungsform ist eine Kassette zur Aufnahme von vier Filmstreifen 1,2,3,4 wie sie in den Figuren 5, 6 und 7 dargestellt ist. Figur 5 zeigt eine Draufsicht der Filmkassette, die in ihrem Aufbau ähnlich einer Kassette nach Figur 1 ist, wenn zwei dieser Zweierkassetten um 180° gedreht aufeinandergebracht werden, jedoch mit dem Unterschied, dass zur Herstellung der Kassette nach Figur 5 eine Trennwand 13 weniger benötigt wird. Die Kassette nach Figur 6 besteht aus einer oberen Wandschale 11, drei Trennwänden 13 und einer unteren Wandschale 12. Für jeden der vier Filmstreifen 1,2,3,4 ist ein Kassettenmaul 6 vorgesehen, welches jeweils zwischen den Wandschalen 11, 12 und den Trennwänden 13 angeordnet ist.

Die Filmstreifen 1,2,3,4 sind mit einem Anschnitt 7 versehen, die es der Filmtransporteinrichtung einer zugehörigen Kamera ermöglichen, jeweils nur einen Filmstreifen an dem Perforations- oder Transportloch 8 zu erfassen. Zum Weitertransport besitzen alle Filmstreifen mindestens eine Reihe von Perforationslöchern, wobei pro Bildfeld mindestens ein Perforationsloch vorgesehen ist.

Je nach der Lage der Emulsionsseite E der Filmstreifen 1,2,3,4 in der Kassette ergeben sich Reihenfolgen, in welchen die Kassette nach den Belichtungen der Filmstreifen um ihre Achsen gedreht werden können. Die Kassette nach Figur 6 enthält beispielsweise Filmstreifen deren Emulsionsseiten E sich alle nach aussen, vom Kassettenzentrum weg, auf den Filmstreifen befinden. Werden die Filmstreifen nacheinander in der Reihenfolge 1 bis 4 belichtet, so wird die Kassette zwischen der Belichtung der einzelnen Filmstreifen parallel zu folgenden Achsen gedreht nach dem Filmstreifen 1 um die L-Achse, nach dem Filmstreifen 2 um die V-Achse und nach dem Filmstreifen 3 nochmals um die L-Achse.

Natürlich können die einzelnen Filmstreifen in jeder beliebigen Reihenfolge belichtet werden. Dies ist insofern von Interesse, als es möglich ist, die Kassette mit verschiedenen Filmsorten zu beladen. Eine Kassette kann zum Beispiel Schwarz-Weiss-Filme und Colorfilme enthalten oder auch Negativ- und Umkehrfilme, so dass mit einer Kamera von einem Motiv Schwarz-Weiss- und Color-Bilder oder Farbbilder und Farb-Diapositive kurz nacheinander aufgenommen werden können.

Figur 7 zeigt eine in ihrem Aufbau einfachere Kassette. Sie besteht aus einer oberen Wandschale 11, nur einer Trennwand 13 und einer unteren Wandschale 12. An beiden Stirnseiten 5 der Kassette sind Filmmäuler 6 angeordnet, die so ausgebildet sind, dass beide Seiten der Filmstreifen 1,2 und 3,4 gegen Lichteinfall geschützt werden. Hierzu ist zwischen den Filmstreifen ein Dichtungsstreifen 16 eingelegt und an den Längsseiten der Kassette mit den seitlichen Längsnähten verschweisst oder verklebt. Die Filmstreifen sind so in die Kassette eingelegt, dass sich jeweils ihre emulsionsfreien Seiten berühren und aufeinander gleiten. Die Emulsionsseiten E zeigen bei allen vier Filmstreifen paarweise nach aussen.

Um Doppelbelichtungen eines Filmstreifens zu vermeiden, ist es erforderlich, ein Kennzeichen an den Filmen oder an der Kassette anzubringen, welches dem Benutzer zeigt oder es ermöglicht festzustellen, ob ein Filmstreifen bereits belichtet ist oder noch nicht.

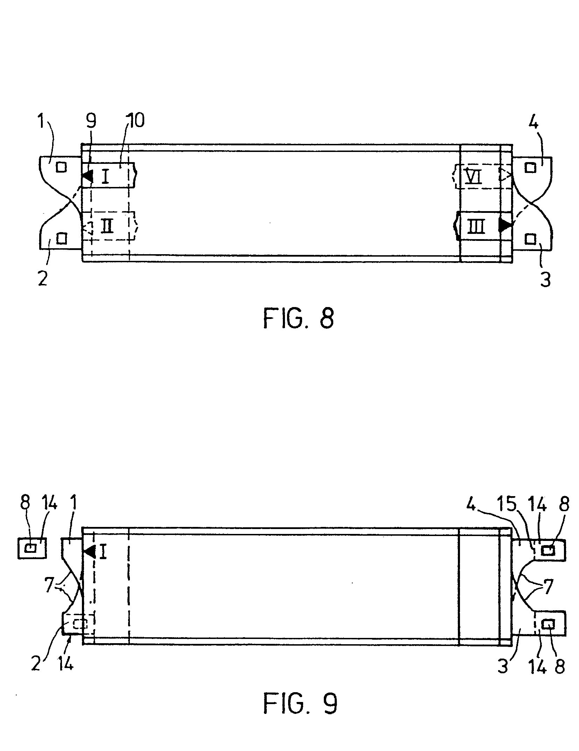

In Figur 8 ist eine einfache Einrichtung zur Verhinderung von Doppelbelichtungen dargestellt. Jedem Filmstreifen einer Zweier- oder Vierer-Kassette ist ein Etikett mit einer Marke 9 und einem Buchstaben oder einer Zahl 10 zugeordnet. Die Kamera besitzt an der Kassetteneinschiebestelle, und zwar an der Seite, an der der Filmstreifen erfasst und transportiert wird, ebenfalls eine entsprechende Marke (nicht dargestellt). Die Kassette wird so in die Kamera eingelegt oder eingeschoben, dass die Marken 9 nebeneinander liegen. Nach der Belichtung des Filmstreifens und nach der Entnahme der Kassette wird das Etikett mit Marke 9 und Filmstreifenzahl 10 durch Ablösen von der Kassette entfernt. Es ist dann an der Kassette sichtbar, dass der Filmstreifen ohne Etikett bereits belichtet wurde. Dieses Verfahren ist einfach und preiswert, hat jedoch den Nachteil, dass der Benutzer der Kassette für das Abziehen des Etiketts verantwortlich ist.

Figur 9 zeigt daher eine Einrichtung zur Vermeidung von Doppelbelichtungen, die wesentlich sicherer ist. Die Filmstreifen 1,2,3,4 in der Kassette sind im vorderen Bereich mit Ausstanzungen 7 versehen, so dass nur schmale Transportlaschen 14 mit Transportlöchern 8 übrigbleiben. Die Transportlaschen 14 können mit einer Perforation 15 versehen sein, an welcher die Transportlasche 14 mit dem Transportloch 8 trennbar oder umfaltbar ist.

Ist Filmstreifen 1 belichtet und die Kassette wird zum Umlegen aus der Kamera genommen, so wird die Transportlasche 14 mit dem Transportloch 8 abgetrennt, so dass die Kamera bei einem versehentlich falschen Wiedereinlegen der Kassette den Filmstreifen nicht mehr erfassen kann. Es ist auch möglich, die Transportlasche 14 umzuknicken, wie bei dem Filmstreifen 2 gezeigt. Die Transportlasche 14 mit dem Transportloch 8 kann von Hand durch den Benutzer abgerissen werden, oder die Kamera enthält ein Trennmesser, welches nach der Belichtung und dem Wiedereinschub des Filmstreifens in die Kassette die Transportlasche 14 abtrennt, ausgelöst durch einen speziellen, von der Kamera gesteuerten Mechanismus oder durch Öffnen des Verschlusses des Kassettenschachtes in der Kamera zur Entnahme der Kassette von Hand (nicht dargestellt).

Die Erfindung umfasst auch andere Ausführungsformen, bei welchen mindestens zwei Filmstreifen mit ihren Längskanten übereinanderliegend in einer flachen Kassette angeordnet sind.

So ist auch eine (nicht dargestellte) Kassette mit drei Filmstreifen ausführbar. Die Filmstreifen können durch Distanzstreifen in der Kassette so gelagert werden, dass sie frei beweglich und mit geringem kameraseitigen Kraftaufwand ausgezogen und eingeschoben werden können.

**Patentansprüche**

1. Filmkassette für mindestens zwei für die Aufnahme mehrerer Bilder geeignete, lichtempfindliche Filmstreifen, bestehend aus einer lichtundurchlässigen flachen biegsamen Tasche von etwa der Länge eines Filmstreifens, gegebenenfalls mit Zwischenwänden zur Trennung der Filmstreifen, und mit mindestens einer senkrecht zur Taschenlänge verlaufenden, mit Lichtabdichtungsmitteln versehenen, als Filmmaul ausgebildeten Kassettenöffnung zum Durchtreten der Filmstreifen, dadurch gekennzeichnet, dass die Filmstreifen (1,2,3,4) mit ihren Längskanten in der Filmkassette übereinanderliegen und in der Filmkassette so angeordnet sind, dass nach der Belichtung eines ersten Filmstreifens (1) die Kassette aus einer zugehörigen Kamera herausgenommen und nach Drehung parallel zu einer ihrer Achsen (L,Q,V) zur Belichtung eines nächsten Filmstreifens wieder einsetzbar ist.

2. Filmkassette nach Anspruch 1, dadurch gekennzeichnet, dass an einer Filmkassetten-Stirnseite (5) zwei Filmmäuler (6) übereinander angeordnet sind und zwei Filmstreifen (1,2) mit je einem einseitigen Anschnitt (7) und mindestens einem Transportloch (8) vorgesehen sind, deren Emulsionsseiten (E) nach verschiedenen Flachseiten der Filmkassette zeigen, und dass zur Belichtung des Filmstreifens (2) eine Drehung der Kassette nach der Belichtung des Filmstreifens (1) um die zur Längsrichtung der Kassette parallelen Achse (L) vorgesehen ist.

3. Filmkassette nach Anspruch 1, dadurch gekennzeichnet, dass an jeder Stirnseite (5) der Filmkassette ein Filmmaul (6) angeordnet ist, und zwei gleiche Filmstreifen (1,2) mit mindestens einem Transportloch am Filmstreifenanfang vorgesehen sind, und dass die Emulsionsseiten (E) der Filmstreifen (1,2) nach verschiedenen Flachseiten der Filmkassette zeigen und zur Belichtung des Filmstreifens (2) eine Drehung der Kassette nach der Belichtung des Filmstreifens (1) um die zur Breite der Kassette parallele Achse (Q) vorgesehen ist.

4. Filmkassette nach Anspruch 1, dadurch gekennzeichnet, dass an jeder Stirnseite (5) der Filmkassette ein Filmmaul (6) angeordnet ist, und zwei gleiche Filmstreifen (1,2) mit mindestens einem Transportloch (8) am Filmstreifenanfang vorgesehen sind, und die Emulsionsseiten (E') nach der gleichen Flachseite der Filmkassette zeigen, und zur Belichtung des Filmstreifens (2) eine Drehung der Filmkassette nach der Belichtung des Filmstreifens (1) um die zur Breiten- und zur Längenachse der Filmkassette senkrechte Achse (V) vorgesehen ist.

5. Filmkassette nach Anspruch 1, dadurch gekennzeichnet, dass an jeder Stirnseite (5) der Filmkassette zwei Filmmäuler (6) übereinander angeordnet sind, und vier gleiche Filmstreifen (1,2,3,4) mit je einem einseitigen Anschnitt (7) und mit mindestens je einem Transportloch (8) im Anfangsbereich der Filmstreifen (1,2,3,4) versehen sind, und die Filmstreifen (1,2,3,4) so in der Kassette angeordnet sind, dass die Emulsionsseiten (E) an den Stirnseiten paarweise nach verschiedenen Flachseiten der Kassette zeigen, und dass Drehungen der Kassette zur Belichtung der Filmstreifen (2,3,4) nach der Belichtung des Filmstreifens (1) um die zur Längsrichtung der Kassette parallelen Achse (L) und um die zur Breiten- und zur Längsachse der Kassette senkrechte Achse (V) oder um die zur Breite der Kassette parallelen Achse (Q) vorgesehen sind.

6. Filmkassette nach einem der Ansprüche 1 bis 5, dadurch gekennzeichnet, dass die Kassette und/oder die Filmstreifen (1,2,3,4) die Filmstreifenfolge- und richtung kennzeichnende Marken (9) und/oder Zahlen (10) zum richtigen Einlegen in eine Kamera tragen, und die Kamera mit einer entsprechenden Marke am Einlegeschlitz versehen ist, und nach der Herausnahme der Kassette aus der Kamera die Marken (9) und/oder Zahlen (10) von der Kassette oder den Filmstreifen (1,2,3,4) abtrennbar sind.

7. Filmkassette nach einem der Ansprüche 1 bis 5, dadurch gekennnzeichnet, dass die Kassette mit Filmstreifen (1,2,3,4) gefüllt ist, die im Bereich des ersten Transportloches (8) nur eine schmale Transportlasche (14) besitzen, die von der Kamera bei oder nach dem Wiedereinschieben des Filmstreifens in die Kassette umgelegt oder abgetrennt wird, so dass ein nochmaliger Transport eines Filmstreifens (1,2,3,4) unmöglich ist.

## Revendications

1. Casette pour au moins deux bandes de pellicules photosensibles appropriées pour recevoir plusieurs images, cette cassette étant constituée d'une poche flexible plate imperméable à la lumière et ayant à peu près la longueur d'une bande de pellicule, éventuellement avec des cloisons intermédiaires pour séparer les bandes de pellicules et au moins une ouverture s'étendant perpendiculairement à la longueur de la poche, comportant des moyens d'étanchéité contre la lumière et réalisés sous forme d'une fente à pellicule pour le passage des bandes de pellicules, caractérisée en ce que les bandes de pellicules (1, 2, 3, 4) sont superposées avec leurs côtés longitudinaux dans la cassette dans laquelle elles sont disposées de telle sorte qu'après l'exposition d'une première bande de pellicule (1), la cassette soit retirée d'une chambre photographique correspondante et qu'après l'avoir fait tourner parallèlement à un de ses axes (L, Q, V), elle puisse être réutilisée pour l'exposition d'une bande de pellicule suivante.

2. Cassette à pellicule suivant la revendication 1, caractérisée en ce que, sur une face frontale (5) de la cassette, sont superposées deux fentes à pellicules (6), tandis que l'on prévoit deux bandes de pellicules (1, 2) comportant chacune une entaille unilatérale (7) et au moins un trou de transport (8), les faces émulsionnées (E) étant orientées vers différents côtés plats de la cassette à pellicule et, pour l'exposition de la bande de pellicule (2), après exposition de la bande de pellicule (1), il est prévu de faire tourner la cassette sur l'axe (L) parallèle au sens longitudinal de cette cassette.

3. Cassette à pellicule suivant la revendication 1, caractérisée en ce que, sur chaque face frontale (5) de cette cassette, on dispose une fente à pellicule (6), tandis que l'on prévoit deux bandes de pellicules identiques (1, 2) comportant au moins un trou de transport à leur début, les faces émulsionnées (E) des bandes de pellicules (1, 2) étant orientées vers différents côtés plats de la cassette et, pour exposer la bande de pellicule (2) il est prévu, après exposition de la bande de pellicule (1), de faire tourner la cassette sur l'axe (Q) parallèle à la largeur de cette cassette.

4. Cassette à pellicule suivant la revendication 1, caractérisée en ce que, sur chaque face frontale (5) de la cassette, on dispose une fente à pellicule (6) et on prévoit deux bandes de pellicules identiques (1, 2) comportant au moins un trou de transport (8) à leur début, les faces émulsionnées (E') étant orientées vers le même côté plat de la cassette et, pour exposer la bande de pellicule (2), il est prévu, après exposition de la bande de pellicule (1), de faire tourner la cassette sur l'axe (V) perpendiculaire à l'axe transversal et à l'axe longitudinal de la cassette.

5. Cassette à pellicule suivant la revendication 1, caractérisée en ce que, sur chaque face frontale (5) de la cassette, sont superposées deux fentes à pellicules (6), tandis que l'on prévoit quatre bandes de pellicules identiques (1, 2, 3, 4) comportant chacune une entaille unilatérale (7) et au moins un trou de transport (8) à leur début, les bandes de pellicules (1, 2, 3, 4) étant disposées dans la cassette de telle sorte que les faces émulsionnées (E) disposées sur les faces frontales soient orientées par paires vers différents côtés plats de la cassette et, pour exposer les bandes de pellicules (2, 3, 4), après exposition de la bande de pellicule (1), il est prévu de faire tourner la cassette sur l'axe (L) parallèle au sens longitudinal de la cassette et sur l'axe (V) perpendiculaire à l'axe transversal et à l'axe longitudinal de la cassette ou sur l'axe (Q) parallèle à la largeur de la cassette.

6. Cassette à pellicule suivant une des revendications 1 à 5, caractérisée en ce que la cassette et/ou les bandes de pellicules (1, 2, 3, 4) comportant des chiffres (10) et/ou des repères (9) caractérisant l'ordre et le sens des bandes de pellicules en vue d'assurer une introduction correcte dans une chambre photographique, cette dernière comportant un repère correspondant à la fente d'introduction tandis que, après avoir retiré la cassette de la chambre photographique, les chiffres (10) et/ou les repères (9) peuvent être détachés de la cassette ou des bandes de pellicules (1, 2, 3, 4).

7. Cassette à pellicule suivant une des revendications 1 à 5, caractérisée en ce qu'elle est remplie de bandes de pellicules (1, 2, 3, 4) qui, dans la zone du premier trou de transport (8), ne comportent qu'un étroite languette de transport (14) qui est retournée ou séparée par la chambre photographique pendant ou après la réintroduction de la bande de pellicule dans la cassette de telle sorte qu'un nouveau transport d'une bande de pellicule (1, 2, 3, 4) soit impossible.

## Claims

1. A film cassette for at least two photosensitive strips of film suitable for taking several pictures, consisting of a lightproof, flat, flexible case substantially equal in length to one strip of film, if appropriate with intermediate walls for separating the strips of film, and with at least one cassette opening in the form of a film orifice for the passage of the strips of film, which cassette opening extends perpendicularly to the length of the case and is provided with light-sealing means, characterised in that the film strips (1, 2, 3, 4) lie with their longitudinal edges one above the other in the film cassette and are arranged in the film cassette in such a way that, after a first film strip (1) has been exposed, the cassette is removed from a corresponding camera and, after being turned parallel to one of its axes (L, Q, V), may be re-inserted for the exposure of the next film strip.

2. A film cassette according to Claim 1, characterised in that two film orifices (6) are arranged one above the other at one end face (5) of the film cassette and two film strips (1, 2), each with an incision (7) on one side and at least one transport perforation (8), are provided, the emulsion sides (E) of which face different flat sides of the film cassette, and in that for the exposure of film strip (2) the cassette is intended to be turned, after the exposure of film strip (1), about the axis (1) running parallel to the longitudinal direction of the cassette.

3. A film cassette according to Claim 1, characterised in that one film orifice (6) is arranged at each end face (5) of the film cassette, and two identical film strips (1, 2) with at least one transport perforation at the beginning of each film strip are provided, and in that the emulsion sides (E) of the films strips (1, 2) face different flat sides of the film cassette and, for the exposure of film strip (2) the cassette is intended to be turned, after the exposure of film strip (1), about the axis (Q) running parallel to the width of the cassette.

4. A film cassette according to Claim 1, characterised in that one film orifice (6) is arranged at each end face (5) of the film cassette, and two identical film strips (1, 2) with at least one transport perforation (8) at the beginning of each film strip are provided, and the emulsion sides (E') face the same flat side of the film cassette, and for the exposure of film strip (2) the film cassette is intended to be turned, after the exposure of film strip (1), about the axis (V) running perpendicularly to the latitudinal and to the longitudinal axis of the film cassette.

5. A film cassette according to Claim 1, characterised in that two film orifices (6) are arranged one above the other at each end face (5) of the film cassette, and four identical film strips (1, 2, 3, 4) are each provided with an incision (7) on one side and at least one transport perforation (8) in the vicinity of the beginning of the film strips (1, 2, 3, 4), and the film strips (1, 2, 3, 4) are arranged in the cassette in such a way that, at the end faces, the emulsion sides (E) face in pairs different flat sides of the cassette, and in that, for the exposure of film strips (2, 3, 4) after the exposure of film strip (1) the cassette is intended to be turned about the axis (L) running parallel to the longitudinal direction of the cassette and about the axis (V) running perpendicularly to the laditudinal and to the longitudinal axis of the cassette or about the axis (Q) running parallel to the width of the cassette.

6. A film cassette according to one of Claims 1 to 5, characterised in that the cassette and/or the film strips (1, 2, 3, 4) carry marks (9) and/or numbers (10) marking the sequence and the direction of the film strips for the correct insertion into a camera and the camera is provided with a corresponding mark at the insertion slot, and after removal of the cassette from the camera, the marks (9) and/or numbers (10) can be removed from the cassette or the film strips (1, 2, 3, 4).

7. A film cassette according to one of Claims 1 to 5, characterised in that the cassette is filled with film strips (1, 2, 3, 4) which, in the vicinity of the first transport perforation (8), have only one narrow transport tag (14) which is folded down or cut off by the camera during or after re-insertion of the film strip into the cassette so that it is impossible for any one film strip (1, 2, 3, 4) to be re-transported.

FIG. 1

FIG. 2

FIG. 3

FIG. 4

FIG. 5

FIG. 6

FIG. 7

FIG. 8

FIG. 9